# EUROPEAN PATENT SPECIFICATION

(11) **EP 3 224 650 B1**
(45) Date of publication and mention of the grant of the patent: **25.11.2020**
(21) Application number: 15788293.7
(22) Date of filing: 20.10.2015
(51) Int. Cl.: G01S 17/89, G02B 26/10

(54) **MULTI-MIRROR SCANNING DEPTH ENGINE**
TIEFENABTASTMASCHINE MIT MEHREREN SPIEGELN
MOTEUR MULTI-MIROIR AU BALAYAGE EN PROFONDEUR

(30) Priority: 24.11.2014 US 201414551104
(43) Date of publication of application: 04.10.2017
(73) Proprietor: Apple Inc., Cupertino CA 95014 (US)
(72) Inventor: SHPUNT, Alexander, Portola Valley, California 94024 (US); GERSON, Yuval, 40600 Tel-Mond (IL)
(74) Representative: Lang, Johannes
(86) International application number: PCT/US2015/056297
(87) International publication number: WO 2016/085587

(56) References cited:
- EP-A2- 1 411 024
- DE-B3-102011 113 147
- KR-B1- 100 867 147
- US-A1- 2013 206 967
- US-A1- 2014 153 001
- US-A1- 2014 291 496
- SANDNER T ET AL: "3D imaging using resonant large-aperture MEMS mirror arrays and laser distance measurement", OPTICAL MEMS AND NANOPHOTONICS, 2008 IEEE/LEOS INTERNATIONALL CONFERENCE ON, IEEE, PISCATAWAY, NJ, USA, 11 August 2008 (2008-08-11), pages 78-79, XP031313089, ISBN: 978-1-4244-1917-3

## Description

### FIELD OF THE INVENTION

The present invention relates generally to methods and devices for projection and capture of optical radiation, and particularly to compact optical scanners.

### BACKGROUND

Various methods are known in the art for optical 3D mapping, i.e., generating a 3D profile of the surface of an object by processing an optical image of the object. This sort of 3D profile is also referred to as a 3D map, depth map or depth image, and 3D mapping is also referred to as depth mapping.

Some methods of 3D mapping use time-of-flight sensing. For example, U.S. Patent Application Publication 2013/0207970, whose disclosure is incorporated herein by reference, describes a scanning depth engine, which includes a transmitter, which emits a beam comprising pulses of light, and a scanner, which is configured to scan the beam, within a predefined scan range, over a scene. The scanner may comprise a micromirror produced using microelectromechanical system (MEMS) technology. A receiver receives the light reflected from the scene and generates an output indicative of the time of flight of the pulses to and from points in the scene. A processor is coupled to control the scanner and to process the output of the receiver so as to generate a 3D map of the scene.

Another time-of-flight scanner using MEMS technology is the Lamda scanner module produced by the Fraunhofer Institute for Photonic Microsystems IPMS (Dresden, Germany). The Lamda module is constructed based on a segmented MEMS scanner device consisting of identical scanning mirror elements. A single scanning mirror of the collimated transmit beam oscillates parallel to a segmented scanning mirror device of the receiver optics.

PCT International Publication WO 2014/016794, whose disclosure is incorporated herein by reference, describes optical scanners with enhanced performance and capabilities. In a disclosed embodiment, optical apparatus includes a stator assembly, which includes a core containing an air gap and one or more coils including conductive wire wound on the core so as to cause the core to form a magnetic circuit through the air gap in response to an electrical current flowing in the conductive wire. A scanning mirror assembly includes a support structure, a base, which is mounted to rotate about a first axis relative to the support structure, and a mirror, which is mounted to rotate about a second axis relative to the base. At least one rotor includes one or more permanent magnets, which are fixed to the scanning mirror assembly and which are positioned in the air gap so as to move in response to the magnetic circuit. A driver is coupled to generate the electrical current in the one or more coils at one or more frequencies selected so that motion of the at least one rotor, in response to the magnetic circuit, causes the base to rotate about the first axis at a first frequency while causing the mirror to rotate about the second axis at a second frequency.

U.S. Patent Application Publication 2014/0153001, describes an optical scanning device that includes a substrate, which is etched to define an array of two or more parallel micromirrors and a support surrounding the micromirrors. Respective spindles connect the micromirrors to the support, thereby defining respective parallel axes of rotation of the micromirrors relative to the support. One or more flexible coupling members are connected to the micromirrors so as to synchronize an oscillation of the micromirrors about the respective axes.

U.S. Patent 7,952,781, a method of scanning a light beam and a method of manufacturing a microelectromechanical system (MEMS), which can be incorporated in a scanning device. In a disclosed embodiment, a rotor assembly having at least one micromirror is formed with a permanent magnetic material mounted thereon, and a stator assembly has an arrangement of coils for applying a predetermined moment on the at least one micromirror.

Document US 2014/291496 A1 relates to modular optics for a scanning engine.

Document US 2013/206967 A1 relates to integrated optoelectronic modules.

Document DE 10 2011 113147 B3 relates to an optical distance measuring device for a high-pressure discharge lamp, having an object beam moved in the direction of the optical axis of a receiving optical unit and emitted from a mirror element, where the mirror element lies on the outer side of optical unit.

Document SANDNER T ET AL, "3D imaging using resonant large-aperture MEMS mirror arrays and laser distance measurement", OPTICAL MEMS AND NANOPHOTONICS, 2008 IEEE/LEOS INTERNATIONALL CONFERENCE ON, IEEE, PISCATAWAY, NJ, USA, (20080811), ISBN 978-1-4244-1917-3 relates to a system for a scanning laser radar employing a MEMS mirror array.

Document KR 100 867 147 B1 relates to a scanning device.

Document EP 1 411 024 A2 relates to a 2-D actuator and a manufacturing method thereof.

### SUMMARY

The invention provides scanning devices and methods for scanning according to the independent claims. Further embodiments are provided in the dependent claims. Embodiments of the present invention provide improved devices and methods for synchronized scanning of transmitted and received radiation.

There is therefore provided, in accordance with an embodiment of the present invention, a scanning device, including a scanner, which includes a base and a gimbal, mounted within the base so as to rotate relative to the base about a first axis of rotation. A transmit mirror and at least one receive mirror are mounted within the gimbal so as to rotate in mutual synchronization about respective second axes, which are parallel to one another and perpendicular to the first axis. A transmitter is configured to emit a beam including pulses of light toward the transmit mirror, which reflects the beam so that the scanner scans the beam over a scene. A receiver is configured to receive, by reflection from the at least one receive mirror, the light reflected from the scene and to generate an output indicative of the time of flight of the pulses to and from points in the scene.

In a disclosed embodiment, the scanner includes a substrate, which is etched to define the base, the gimbal, and the transmit and receive mirrors in a microelectromechanical systems (MEMS) process.

In some embodiments, the transmit and receive mirrors are connected to the gimbal by respective hinges disposed along the respective second axes and configured so that the transmit and receive mirrors rotate about the respective hinges by oscillation at respective resonant frequencies, and the transmit and receive mirrors are coupled together so as to synchronize the oscillation. The gimbal may be driven to rotate relative to the base in a non-resonant mode. Typically, rotations of the transmit and receive mirrors are synchronized in frequency, phase and amplitude.

In one embodiment, the at least one receive mirror includes two or more receive mirrors mounted in the gimbal with the transmit mirror, and the receiver is configured to receive the light reflected from the scene by reflection from all of the two or more receive mirrors.

In some embodiments, the scanner is configured to scan the light over a predefined angular range, and the device includes a reflector, which is positioned so as to reflect the light emitted by the transmitter onto the transmit mirror and to reflect the light reflected from the scene from the at least one receive mirror to the receiver at reflection angles that are outside the predefined angular range. The transmitter is configured to emit the light within a predefined wavelength range, and the reflector includes, in one embodiment, an interference filter, which is positioned between the scanner and the scene and is configured to pass the light within the predefined wavelength range that is incident on the interference filter at angles within the predefined angular range, while reflecting the light within the predefined wavelength range that is incident on the interference filter outside the predefined angular range. Typically the transmit mirror and the at least one receive mirror are spaced sufficiently far apart so that specular reflections of the emitted beam by the reflector do not fall within a field of view of the receiver.

In a disclosed embodiment, the device includes a collimating lens, which is positioned between the transmitter and the scanner and is configured to collimate the light emitted by the transmitter. A collection lens is positioned between the scanner and the receiver and is configured to focus the reflected light onto the receiver. In one embodiment, the transmitter includes a laser diode, and the receiver includes an avalanche photodiode.

There is also provided, in accordance with an embodiment of the present invention, a method for scanning, which includes providing a scanner, which includes a base, a gimbal, mounted within the base so as to rotate relative to the base about a first axis of rotation, and a transmit mirror and at least one receive mirror, mounted within the gimbal so as to rotate in mutual synchronization about respective second axes, which are parallel to one another and perpendicular to the first axis. A beam including pulses of light is directed toward the transmit mirror, which reflects the beam so that the scanner scans the beam over a scene. The light reflected from the scene is received by reflection from the at least one receive mirror, and an output is generated, which is indicative of the time of flight of the pulses to and from points in the scene.

In one embodiment, the method includes processing the output in order to generate a three-dimensional (3D) map of the scene based on the time of flight of the pulses.

The present invention will be more fully understood from the following detailed description of the embodiments thereof, taken together with the drawings in which:

### BRIEF DESCRIPTION OF THE DRAWINGS

Fig. 1 is a schematic, pictorial illustration of an optical scanning device, in accordance with an embodiment of the present invention;
Fig. 2A is a schematic, pictorial illustration of the optical scanning device of Fig. 1, showing the paths of transmitted and received beams in the device in accordance with an embodiment of the present invention; and
Fig. 2B is a schematic side view of the optical scanning device of Fig. 1, showing the paths of transmitted and received beams in the device in accordance with an embodiment of the present invention.

### DETAILED DESCRIPTION OF EMBODIMENTS

Embodiments of the present invention that are described herein provide a scanning device with separate, synchronized scanning mirrors for the transmit and receive channels. The mirrors may advantageously be produced as a compact, coupled array on a single gimbal, using a MEMS process.

In the disclosed embodiments, the scanning device comprises a scanner, which includes a gimbal mounted within a base so as to rotate relative to the base about a first axis of rotation. A transmit mirror and at least one receive mirror are mounted within the gimbal and rotate in mutual synchronization about respective axes, which are parallel to one another and perpendicular to the first axis of the gimbal. A transmitter emits a beam comprising pulses of light toward the transmit mirror, which reflects the beam so that the scanner scans the beam over a scene. A receiver receives the light reflected from the scene, by reflection from the receive mirror (or mirrors), and generates an output indicative of the time of flight of the pulses to and from points in the scene. This output may be processed, for example, in order to generate a 3D map of the scene.

This novel design, with closely-coupled transmit and receive mirrors on the same gimbal, is advantageous in producing compact scanning devices, of reduced size and complexity relative to devices that are known in the art. Because the optical transmit and receive channels are parallel but separate, there is no need for a beamsplitter to combine the channels, thus reducing component count and avoiding the loss of received light that inevitably occurs at the beamsplitter. Separation of the transmit and receive channels is also useful in reducing the amount of stray light that reaches the receiver due to specular reflections of the transmitted beam within the scanning device.

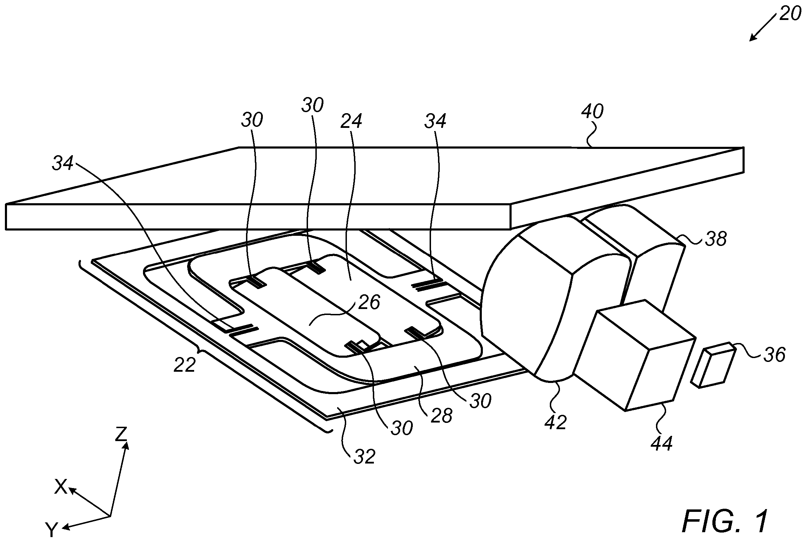

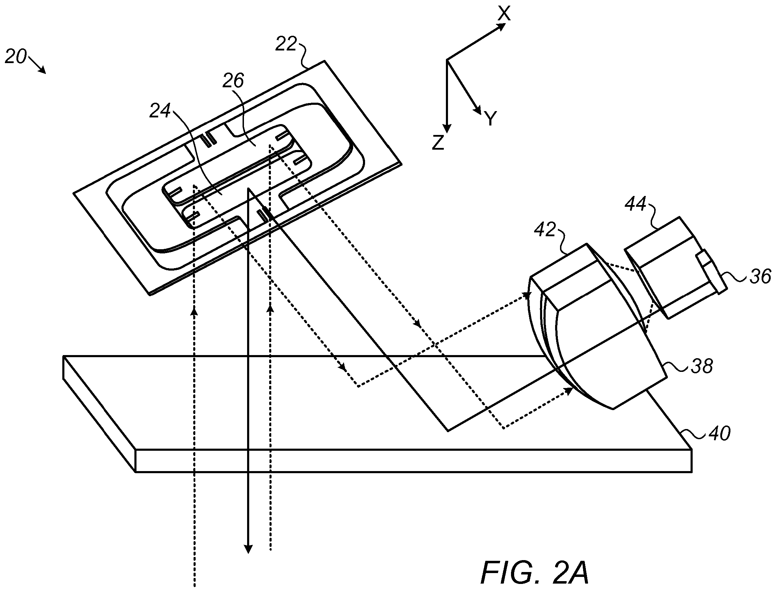

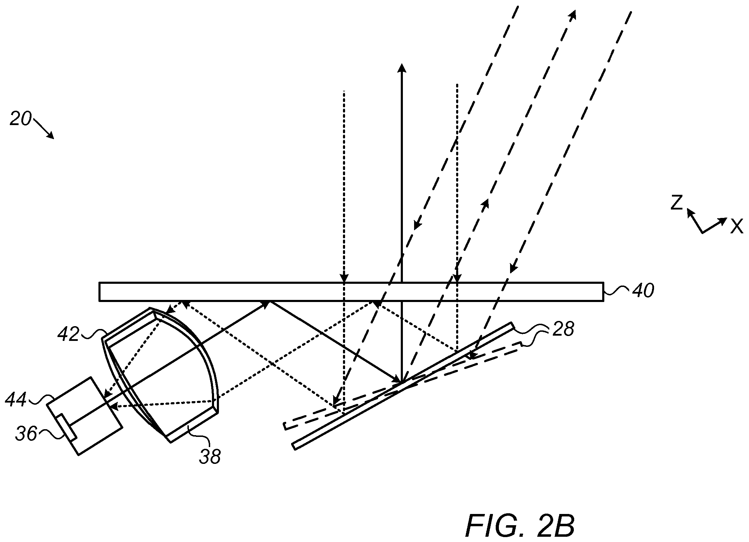

Reference is now made to Figs. 1, 2A and 2B, which schematically illustrate an optical scanning device 20, in accordance with an embodiment of the present invention. Fig. 1 presents a pictorial overview of device 20, while Figs. 2A and 2B are pictorial and side views, respectively, showing optical beam paths within the device. Device 20 can be particularly useful as a part of a 3D mapping system or other depth-sensing (LIDAR) device, in conjunction with a suitable processor, scan driver, and mechanical packaging, as are known in the art. (These components are omitted from the figures, however, for the sake of simplicity.) Alternatively, device 20 may be adapted for use as a scanning optical transceiver in other applications, such as free-space optical communications over a wide-angle optical link.

Scanning device 20 is built around a scanner 22, comprising an adjacent transmit mirror 24 and receive mirror 26, which are mounted together within a gimbal 28. Although only a single receive mirror is shown here, in alternative embodiments (not shown in the figures), two or more receive mirrors may be mounted side-by-side in gimbal 28, parallel to transmit mirror 24. The use of multiple, synchronized receive mirrors in this manner is advantageous in enlarging the effective aperture of the receiver, while maintaining the small size and hence low inertia of the individual mirrors. Typically, for portable applications, the area of each micromirror in device 20 is in the range of 2.5 to 50 mm², and the overall area of scanner 22 is on the order of 1 cm². Alternatively, larger or even smaller scanners of this sort may be produced, depending on application requirements.

Mirrors 24 and 26 rotate about respective hinges 30 relative to gimbal 28, while gimbal 28 rotates about hinges 34 relative to a base 32. Hinges 30 (and hence the axes of rotation of mirrors 24 and 26) are parallel to one another, along the X-axis in the figures. Hinges 34 are oriented so that the axis of rotation of gimbal 28, shown as being oriented along the Y-axis, is perpendicular to the mirror axes. As noted earlier, scanner 22 may be made from a substrate, such as a semiconductor wafer, which is etched to define base 32, gimbal 28, and transmit and receive mirrors 24, 26 in a MEMS process. (A reflective coating is deposited on the mirrors as a part of the process.) Gimbal 28 and mirrors 24 and 26 may be driven to rotate about their respective axes by any suitable sort of drive, such as the magnetic drives described in the references cited above in the Background section, or other types of magnetic and electrical scanner drives that are known in the art.

The dimensions and masses of transmit and receive mirrors 24 and 26 and hinges 30 may desirably be chosen so that the mirrors rotate about their respective hinges 30 by oscillation at respective resonant frequencies. Although these resonant frequencies may be slightly different, due to manufacturing tolerances, the transmit and receive mirrors are coupled together, as described below, so as to synchronize their oscillations. Typically, this coupling synchronizes the rotations of the transmit and receive mirrors in frequency, phase and amplitude. On the other hand, gimbal 28 may be driven to rotate relative to base 32 in a non-resonant mode, typically at a frequency substantially lower than the resonant frequency of mirrors 24 and 26. The fast rotation of mirrors 24 and 26 about the X-axis and the slower rotation of gimbal 28 about the Y-axis may be coordinated so as to define a raster scan of the transmitted and received beams over an area of interest. Alternatively, the rotations of mirrors 24, 26 and gimbal 28 may be controlled to generate scan patterns of other sorts.

Various types of links may be used to couple the rotations of mirrors 24 and 26. For example, the mirrors may be coupled together by a mechanical link in contact with the mirrors, as described in the above-mentioned U.S. Patent Application Publication 2014/0153001. Alternatively or additionally, the mirrors may be coupled together by a link exerted by electromagnetic force, which may operate without mechanical contact between the mirrors, as described, for example, in U.S. Provisional Patent Application 61/929,071. Typically, a weak coupling force is sufficient to engender the desired synchronization, particularly when the mirrors are driven to scan at or near their resonant frequencies of rotation.

A transmitter 36 emits pulses of light, which are collimated by a collimating lens 38 and directed by a selective reflector 40 toward transmit mirror 24. (The term "light," in the context of the present description and in the claims, refers to optical radiation of any wavelength, including visible, infrared, and ultraviolet radiation.) Light reflected back from the scene is directed by receive mirror 26 toward reflector 40, and from reflector 40 to a collection lens 42, which focuses the reflected light onto a receiver 44. In alternative optical layouts (not shown in the figures), light reflected back from the scene may be directed by receive mirror 26 toward a collection lens, without reflection from reflector 40. Additionally or alternatively, reflector 40 may be eliminated from the transmit path, as well.

Receiver 44 typically comprises a high-speed optoelectronic detector. In one embodiment, transmitter 36 comprises a pulsed laser diode, while receiver 44 comprises an avalanche photodiode, but any other suitable sorts of emitting and sensing components may alternatively be used in device 20.

The distance between mirrors 24 and 26 is chosen so as to enable placement of transmit and receive optics in the respective beam paths, and to eliminate specular reflections of the transmitted beam within the scanning device. In particular the mirrors are spaced sufficiently far apart so that specular reflections by reflector 40 of the beam emitted by transmitter 36 do not fall within a field of view of receiver 44. Specifically, in the present embodiment, to prevent direct passage of transmitted light from transmit mirror 24 to receive mirror 26 via reflector 40, the distance between the mirrors should be larger than the lateral travel of the transmit beam on such a path when the normal to reflector 40 is within the instantaneous field of view of the receive channel. For example, if the distance between mirrors 24, 26 and reflector 40 is 7 mm, and the field of view of receive channel is cone with a half-angle of 3°, then the distance between the mirrors should be greater than 2^{∗}sin(3°)^{∗}7 mm = 0.73 mm. Otherwise, receiver 44 will be blinded by specular reflection.

Scanner 22 scans the transmitted and received beams of light together over a predefined angular range, so that at each point in the scan, receiver 44 receives light from the same area of the scene that is illuminated at that point by transmitter 36. Fig. 2B shows the transmitted and received beam angles, by way of example, at two different rotation angles of gimbal 28 within the angular scan range. Reflector 40 is configured and positioned so as to selectively reflect the light emitted by transmitter 36 onto transmit mirror 24 at reflection angles that are outside the angular range of the scan, and similarly to reflect the light reflected from the scene from receive mirror 26 to receiver 44 at such angles. On the other hand, as shown in Figs. 2A and 2B, reflector 40 selectively transmits light within the predefined angular scan range between mirrors 24, 26 and the scene being scanned (although as noted earlier, in some alternative embodiments, reflector 40 is not present in the transmit channel or the receive channel, or both).

In order to achieve this sort of angular selectivity, reflector 40 may comprise an interference filter, typically in the form of a coating on the reflector surface, which is designed to operate with the predefined wavelength range of the light that is emitted by transmitter 36. The wavelength response of such an interference filter changes as a function of the angle of incidence of light rays on the filter, wherein typically the spectral transmission band of the filter shifts toward shorter wavelengths as the angle of incidence increases. This angle-dependent behavior, and its use in achieving the sort of angular selectivity that characterizes reflector 40, is described further in U.S. Provisional Patent Application 61/940,439, filed February 16, 2014.

The interference filter coating on reflector 40 is thus designed to pass the light, within the predefined wavelength range of transmitter 36, that is incident on the reflector at angles within the predefined angular scan range of scanner 22, such as the light passing between mirrors 24, 26 and the scene being scanned. Meanwhile, the interference filter coating reflects the light within the predefined wavelength range that is incident on reflector 40 outside the predefined angular scan range, such as the light passing between transmitter 36 and mirror 24 and between mirror 26 and receiver 44.

The interference filter coating thus enables reflector 40 to serve both as a turning mirror for the light that is directed toward it at a high angle, and as a bandpass filter for the same beam of light when scanned through the interference filter coating in a lower range of angles. Reflector 40 thus provides the added benefit of reducing the transmission of undesired stray light outside the wavelength range of interest from the scene back to receiver 44. This dual use of reflector 40 - as both a turning mirror and a bandpass filter - facilitates the compact design of scanning device 20 and reduces its component count relative to devices that are known in the art.

Although the figures described above show a particular optical design and layout of the components of scanning device 20, the principles of the present invention may be applied in scanning devices of other designs. For example, scanner 22 may comprise mirrors and gimbals of different shapes, sizes, orientations and spacing from those shown in the figures, and may further comprise two or more parallel receive mirrors, as noted above. As another example, transmitter 36 and receiver 44 may be positioned to transmit and receive light to and from scanner 22 directly, without intervening reflector 40. Alternative designs based on the principles set forth above will be apparent to those skilled in the art.

## Claims

1. A scanning device (20), comprising:
a scanner (22), which comprises:
a base (32);
a gimbal (28), mounted within the base so as to rotate relative to the base about a first axis of rotation; and
a transmit mirror (24) and at least one receive mirror (26), which is separate from the transmit mirror, wherein the transmit mirror and the at least one receive mirror are both mounted within the same gimbal so as to rotate in mutual synchronization about respective second axes, which are parallel to one another and perpendicular to the first axis;
a transmitter (36), which is configured to emit along an optical transmit channel a beam comprising pulses of light within a predefined wavelength range toward the transmit mirror (24), which reflects the beam so that the scanner (22) scans the beam over a predefined angular range toward a scene; and
a receiver (44), which is configured to receive, by reflection from the at least one receive mirror (26) along an optical receive channel, which is parallel to but separate from the optical transmit channel, the light reflected from the scene and to generate an output indicative of the time of flight of the pulses to and from points in the scene,
**characterized in that** the device comprises ; a reflector (40), wherein the reflector (40) comprises an interference filter (40), which is positioned between the scanner (22) and the scene and is configured to pass the light between the scanner (22) and the scene within the predefined wavelength range that is incident on the interference filter (40) at angles within the predefined angular range, while reflecting the light within the predefined wavelength range that is incident on the interference filter (40) outside the predefined angular range,
wherein the transmitter (36) and receiver (44) are located so that the reflector (40) reflects the light emitted by the transmitter (36) onto the transmit mirror (24) and reflects the light reflected from the scene from the at least one receive mirror (26) to the receiver (44) at reflection angles that are outside the predefined angular range.

2. The device according to claim 1, wherein the scanner (22) comprises a substrate, which is etched to define the base, the gimbal, and the transmit and receive mirrors in a microelectromechanical systems (MEMS) process.

3. The device according to claim 1, wherein the transmit and receive mirrors are connected to the gimbal by respective hinges disposed along the respective second axes and configured so that the transmit and receive mirrors rotate about the respective hinges by oscillation at respective resonant frequencies, and wherein the transmit and receive mirrors are coupled together so as to synchronize the oscillation.

4. The device according to claim 3, wherein the gimbal is driven to rotate relative to the base in a non-resonant mode.

5. The device according to claim 3, wherein rotations of the transmit and receive mirrors are synchronized in frequency, phase and amplitude.

6. The device according to any of claims 1-5, wherein the at least one receive mirror (26) comprises two or more receive mirrors mounted in the gimbal with the transmit mirror (24), and wherein the receiver (44) is configured to receive the light reflected from the scene by reflection from all of the two or more receive mirrors.

7. The device according to any of claims 1-5, wherein the transmit mirror (24) and the at least one receive mirror (26) are spaced sufficiently far apart so that specular reflections of the emitted beam by the reflector do not fall within a field of view of the receiver (44).

8. The device according to any of claims 1-5, and comprising:
a collimating lens, which is positioned between the transmitter (36) and the scanner (22) and is configured to collimate the light emitted by the transmitter (36); and
a collection lens, which is positioned between the scanner (22) and the receiver(44) and is configured to focus the reflected light onto the receiver (44).

9. The device according to any of claims 1-5, wherein the transmitter (36) comprises a laser diode, and the receiver (44) comprises an avalanche photodiode.

10. A method for scanning, comprising:
providing a scanner (22), which comprises:
a base (32);
a gimbal (28), mounted within the base so as to rotate relative to the base about a first axis of rotation; and
a transmit mirror (24) and at least one receive mirror (26), which is separate from the transmit mirror, wherein the transmit mirror and the at least one receive mirror are both mounted within the same gimbal so as to rotate in mutual synchronization about respective second axes, which are parallel to one another and perpendicular to the first axis;
directing a beam comprising pulses of light along an optical transmit channel toward the transmit mirror (24), which reflects the beam so that the scanner (22) scans the beam over a scene; and
receiving, by reflection from the at least one receive mirror (26) along an optical receive channel, which is parallel to but separate from the optical transmit channel, the light reflected from the scene and generating an output indicative of the time of flight of the pulses to and from points in the scene,
**characterized in that** the method comprises positioning a reflector (40) comprising an interference filter between the scanner (22) and the scene so as to pass the light between the scanner (22) and the scene within the predefined wavelength range that is incident on the interference filter at angles within the predefined angular range, while reflecting the light within the predefined wavelength range that is incident on the interference filter outside the predefined angular range,
wherein the optical transmit channel and the optical receive channel are located so that the reflector (40) reflects the beam onto the transmit mirror (24) and reflects the light reflected from the scene from the at least one receive mirror (26) along the optical receive channel at reflection angles that are outside the predefined angular range.

11. The method according to claim 10, wherein providing the scanner (22) comprises etching a substrate to define the base, the gimbal, and the transmit and receive mirrors in a microelectromechanical systems (MEMS) process.

12. The method according to claim 10, wherein providing the scanner (22) comprises connecting the transmit and receive mirrors to the gimbal by respective hinges disposed along the respective second axes and configured so that the transmit and receive mirrors rotate about the respective hinges by oscillation at respective resonant frequencies, and coupling the transmit and receive mirrors together so as to synchronize the oscillation.

13. The method according to any of claims 10-12, and comprising processing the output in order to generate a three-dimensional (3D) map of the scene based on the time of flight of the pulses.

## Patentansprüche

1. Scanvorrichtung (20), umfassend:
einen Scanner (22), der umfasst:
eine Basis (32);
einen Kardanring (28), der innerhalb der Basis so montiert ist, dass er sich relativ zur Basis um eine erste Rotationsachse drehen kann; und
einen Sendespiegel (24) und mindestens einen Empfangsspiegel (26), der vom Sendespiegel getrennt ist, wobei der Sendespiegel und der mindestens eine Empfangsspiegel beide in demselben Kardanring so montiert sind, dass sie sich in gegenseitiger Synchronisation um jeweilige zweite Achsen drehen, die parallel zueinander und senkrecht zur ersten Achse sind;
einen Sender (36), der konfiguriert ist, um entlang eines optischen Sendekanals einen Strahl, der Lichtpulse innerhalb eines vordefinierten Wellenlängenbereichs umfasst, in Richtung des Sendespiegels (24) zu emittieren, der den Strahl reflektiert, so dass der Scanner (22) den Strahl über einen vordefinierten Winkelbereich zu einer Szene scannt; und
einen Empfänger (44), der konfiguriert ist, um durch Reflexion von dem mindestens einen Empfangsspiegel (26) entlang eines optischen Empfangskanals, der parallel zu dem optischen Sendekanal ist, aber von diesem getrennt ist, das von der Szene reflektierte Licht zu empfangen und eine Ausgabe zu erzeugen, die die Laufzeit der Pulse zu und von Punkten in der Szene anzeigt,
**dadurch gekennzeichnet, dass** die Vorrichtung einen Reflektor (40) umfasst, wobei der Reflektor (40) ein Interferenzfilter (40) umfasst, das zwischen dem Scanner (22) und der Szene positioniert ist und so konfiguriert ist, dass zwischen dem Scanner (22) und der Szene das Licht innerhalb des vordefinierten Wellenlängenbereichs, das auf das Interferenzfilter (40) mit Winkeln innerhalb des vordefinierten Winkelbereichs einfällt, durchgelassen wird, während das Licht innerhalb des vordefinierten Wellenlängenbereichs, das auf das Interferenzfilter (40) außerhalb des vordefinierten Winkelbereichs einfällt, reflektiert wird,
wobei der Sender (36) und der Empfänger (44) so angeordnet sind, dass der Reflektor (40) das vom Sender (36) emittierte Licht auf den Sendespiegel (24) reflektiert und das von der Szene von dem mindestens einem Empfangsspiegel (26) reflektierte Licht mit Reflexionswinkeln, die außerhalb des vordefinierten Winkelbereichs liegen, zum Empfänger (44) reflektiert.

2. Vorrichtung nach Anspruch 1, wobei der Scanner (22) ein Substrat umfasst, das geätzt wird, um die Basis, den Kardanring und die Sende- und Empfangsspiegel in einem mikroelektromechanischen Systemprozess (MEMS) auszubilden.

3. Vorrichtung nach Anspruch 1, wobei die Sende- und Empfangsspiegel mit dem Kardanring durch entsprechende Scharniere verbunden sind, die entlang der jeweiligen zweiten Achse angeordnet und so konfiguriert sind, dass sich die Sende- und Empfangsspiegel durch Oszillationen bei jeweiligen Resonanzfrequenzen um die jeweiligen Scharniere drehen, und wobei die Sende- und Empfangsspiegel miteinander gekoppelt sind, um die Oszillationen zu synchronisieren.

4. Vorrichtung nach Anspruch 3, wobei der Kardanring angetrieben wird, um sich in einem nicht-resonanten Modus relativ zur Basis zu drehen.

5. Vorrichtung nach Anspruch 3, wobei Drehungen der Sende- und Empfangsspiegel in der Frequenz, Phase und Amplitude synchronisiert sind.

6. Vorrichtung nach einem der Ansprüche 1 bis 5, wobei der mindestens eine Empfangsspiegel (26) zwei oder mehr Empfangsspiegel umfasst, die in dem Kardanring mit dem Sendespiegel (24) montiert sind, und wobei der Empfänger (44) zum Empfangen des von der Szene durch Reflexion von allen zwei oder mehr Empfangsspiegeln reflektierte Licht konfiguriert ist.

7. Vorrichtung nach einem der Ansprüche 1 bis 5, wobei der Sendespiegel (24) und der mindestens eine Empfangsspiegel (26) ausreichend weit voneinander beabstandet sind, so dass spiegelnde Reflexionen des vom Reflektor emittierten Strahls nicht in ein Blickfeld des Empfängers (44) fallen.

8. Vorrichtung nach einem der Ansprüche 1 bis 5 und umfassend:
eine Kollimationslinse, die zwischen dem Sender (36) und dem Scanner (22) positioniert ist und konfiguriert ist, um das vom Sender (36) emittierte Licht zu kollimieren; und
eine Sammellinse, die zwischen dem Scanner (22) und dem Empfänger (44) positioniert ist und konfiguriert ist, um das reflektierte Licht auf den Empfänger (44) zu fokussieren.

9. Vorrichtung nach einem der Ansprüche 1 bis 5, wobei der Sender (36) eine Laserdiode umfasst und der Empfänger (44) eine Lawinen-Photodiode umfasst.

10. Verfahren zum Scannen, umfassend:
Bereitstellen eines Scanners (22), der umfasst:
eine Basis (32);
einen Kardanring (28), der innerhalb der Basis so montiert ist, dass er sich relativ zur Basis um eine erste Rotationsachse drehen kann; und
einen Sendespiegel (24) und mindestens einen Empfangsspiegel (26), der vom Sendespiegel getrennt ist, wobei der Sendespiegel und der mindestens eine Empfangsspiegel beide in demselben Kardanring so montiert sind, dass sie sich in gegenseitiger Synchronisation um jeweilige zweite Achsen drehen, die parallel zueinander und senkrecht zur ersten Achse sind;
Ausrichten eines Strahls, der Lichtpulse umfasst, entlang eines optischen Sendekanals auf den Sendespiegel (24), der den Strahl so reflektiert, dass der Scanner (22) den Strahl über eine Szene scannt; und
Empfangen durch Reflexion von dem mindestens einen Empfangsspiegel (26) entlang eines optischen Empfangskanals, der parallel zu dem optischen Sendekanal ist, aber von diesem getrennt ist, des von der Szene reflektierten Lichts und Erzeugen einer Ausgabe, die die Laufzeit der Pulse zu und von Punkten in der Szene anzeigt,
**dadurch gekennzeichnet, dass** das Verfahren die Positionierung eines Reflektors (40) umfasst, der ein Interferenzfilter (40) zwischen dem Scanner (22) und der Szene umfasst, so dass zwischen dem Scanner (22) und der Szene das Licht innerhalb des vordefinierten Wellenlängenbereichs, das auf das Interferenzfilter (40) mit Winkeln innerhalb des vordefinierten Winkelbereichs einfällt, durchgelassen wird, während das Licht innerhalb des vordefinierten Wellenlängenbereichs, das auf das Interferenzfilter (40) außerhalb des vordefinierten Winkelbereichs einfällt, reflektiert wird,
wobei der optische Sendekanal und der optische Empfangskanal so angeordnet sind, dass der Reflektor (40) den Strahl auf den Sendespiegel (24) reflektiert und das von der Szene von dem mindestens einem Empfangsspiegel (26) reflektierte Licht mit Reflexionswinkeln, die außerhalb des vordefinierten Winkelbereichs liegen, entlang dem optischen Empfangskanal reflektiert.

11. Verfahren nach Anspruch 10, wobei das Bereitstellen des Scanners (22) das Ätzen eines Substrats zum Definieren der Basis, des Kardanrings und der Sende- und Empfangsspiegel in einem mikroelektromechanischen Systemprozess (MEMS) umfasst.

12. Verfahren nach Anspruch 10, wobei das Bereitstellen des Scanners (22) umfasst das Verbinden der Sende- und Empfangsspiegel mit dem Kardanring durch jeweilige Scharniere, die entlang den jeweiligen zweiten Achse angeordnet sind und so konfiguriert sind, dass sich die Sende- und Empfangsspiegel durch Oszillation bei den jeweiligen Resonanzfrequenzen um die jeweiligen Scharniere drehen, und das Koppeln der Sende- und Empfangsspiegel, um die Oszillation zu synchronisieren.

13. Verfahren nach einem der Ansprüche 10 bis 12, und umfassend das Verarbeiten der Ausgabe, um eine dreidimensionale (3D) Karte der Szene basierend auf der Laufzeit der Pulse zu erzeugen.

## Revendications

1. Un dispositif à balayage (20), comprenant :
un scanner (22), qui comprend :
une base (32) ;
une suspension (28), montée à l'intérieur de la base de manière à tourner par rapport à la base autour d'un premier axe de rotation ; et
un miroir d'émission (24) et au moins un miroir de réception (26), qui est distinct du miroir d'émission, le miroir d'émission et l'au moins un miroir de réception étant tous deux montés dans la même suspension de manière à tourner en synchronisme mutuel autour de seconds axes respectifs, qui sont parallèles entre eux et perpendiculaires au premier axe ;
un émetteur (36), qui est configuré pour émettre le long d'un canal d'émission optique un faisceau comprenant des impulsions d'une lumière sur une plage de longueurs d'onde prédéfinie en direction du miroir d'émission (24), qui réfléchit le faisceau de manière que le scanner (22) scanne le faisceau sur une plage angulaire prédéfinie tournée vers une scène ; et
un récepteur (44), qui est configuré pour recevoir, par réflexion en provenance de l'au moins un miroir de réception (26) le long d'un canal de réception optique qui est parallèle au canal d'émission optique mais distinct de celui-ci, la lumière réfléchie par la scène et pour générer une sortie représentative du temps de vol des impulsions en direction, et en provenance, de points de la scène,
**caractérisé en ce que** le dispositif comprend un réflecteur (40), le réflecteur (40) comprenant un filtre interférentiel (40) qui est positionné entre le scanner (22) et la scène, et qui est configuré pour laisser passer entre le scanner (22) et la scène la lumière sur la plage de longueurs d'onde prédéfinie qui frappe le filtre interférentiel (40) sous des angles compris dans la plage angulaire prédéfinie, tout en réfléchissant la lumière sur la plage de longueurs d'onde prédéfinie qui frappe le filtre interférentiel (40) en dehors de la plage angulaire prédéfinie,
dans lequel l'émetteur (36) et le récepteur (44) sont situés de manière que le réflecteur (40) réfléchisse vers le miroir d'émission (24) la lumière émise par l'émetteur (36), et réfléchisse vers le récepteur (44) la lumière réfléchie par la scène provenant de l'au moins un miroir de réception (26) sous des angles de réflexion qui sont en dehors de la plage angulaire prédéfinie.

2. Le dispositif de la revendication 1, dans lequel le scanner (22) comprend un substrat, qui est gravé pour définir la base, la suspension, et les miroirs d'émission et de réception dans un processus pour systèmes microélectromécaniques (MEMS).

3. Le dispositif de la revendication 1, dans lequel les miroirs d'émission et de réception sont reliés à la suspension par des articulations respectives disposées le long des seconds axes respectifs et configurés de manière que les miroirs d'émission et de réception tournent autour des articulations respectives en oscillant à des fréquences de résonance respectives, et dans lequel les miroirs d'émission et de réception sont couplés ensemble de manière à synchroniser l'oscillation.

4. Le dispositif de la revendication 3, dans lequel la suspension est entraînée pour tourner par rapport à la base en un mode non résonant.

5. Le dispositif de la revendication 3, dans lequel les rotations des miroirs d'émission et de réception sont synchronisées en fréquence, phase et amplitude.

6. Le dispositif selon l'une des revendications 1 à 5, dans lequel l'au moins un miroir de réception (26) comprend deux ou plus miroirs de réception montés dans la suspension avec le miroir d'émission (24), et dans lequel le récepteur (44) est configuré pour recevoir la lumière réfléchie provenant de la scène par réflexion en provenance de tous les deux ou plus miroirs de réception.

7. Le dispositif selon l'une des revendications 1 à 5, dans lequel le miroir d'émission (24) et l'au moins un miroir de réception (26) sont suffisamment éloignés l'un de l'autre pour que les réflexions spéculaires du faisceau émis par le réflecteur ne se situent pas à l'intérieur d'un champ de vision du récepteur (44).

8. Le dispositif selon l'une des revendications 1 à 5, comprenant :
une lentille de collimation, qui est positionnée entre l'émetteur (36) et le scanner (22) et qui est configurée pour collimater la lumière émise par l'émetteur (36) ; et
une lentille de recueil, qui est positionnée entre le scanner (22) et le récepteur (44) et qui est configurée pour focaliser sur le récepteur (44) la lumière réfléchie.

9. Le dispositif selon l'une des revendications 1 à 5, dans lequel l'émetteur (36) comprend une diode laser, et le récepteur (44) comprend une photodiode à avalanche.

10. Un procédé de balayage, comprenant :
l'obtention d'un scanner (22), qui comprend :
une base (32) ;
une suspension (28), montée à l'intérieur de la base de manière à tourner par rapport à la base autour d'un premier axe de rotation ; et
un miroir d'émission (24) et au moins un miroir de réception (26), qui est distinct du miroir d'émission, le miroir d'émission et l'au moins un miroir de réception étant tous deux montés dans la même suspension de manière à tourner en synchronisme mutuel autour de seconds axes respectifs, qui sont parallèles entre eux et perpendiculaires au premier axe ;
l'envoi d'un faisceau comprenant des impulsions de lumière le long d'un canal d'émission optique en direction du miroir d'émission (24), qui réfléchit le faisceau de manière que le scanner (22) balaye le faisceau sur une scène ; et
la réception, par réflexion depuis l'au moins un miroir de réception (26) le long d'un canal de réception optique, qui est parallèle au canal d'émission optique mais distinct de celui-ci, de la lumière réfléchie par la scène, et la génération d'une sortie représentative du temps de vol des impulsions en direction, et en provenance, de points de la scène,
**caractérisé en ce que** le procédé comprend en outre le positionnement d'un réflecteur (40), le réflecteur (40) comprenant un filtre interférentiel entre le scanner (22) et la scène de manière à laisser passer entre le scanner (22) et la scène la lumière sur la plage de longueurs d'onde prédéfinie qui frappe le filtre interférentiel sous des angles compris dans la plage angulaire prédéfinie, tout en réfléchissant la lumière sur la plage de longueurs d'onde prédéfinie qui frappe le filtre interférentiel en dehors de la plage angulaire prédéfinie,
dans lequel le canal d'émission optique et le canal de réception optique sont situés de manière que le réflecteur (40) réfléchisse le faisceau sur le miroir d'émission (24), et réfléchisse la lumière réfléchie par la scène provenant de l'au moins un miroir de réception (26) le long du canal de réception optique sous des angles de réflexion qui sont en dehors de la plage angulaire prédéfinie.

11. Le procédé selon la revendication 10, dans lequel l'obtention du scanner (22) comprend la gravure d'un substrat pour définir la base, la suspension, et les miroirs d'émission et de réception dans un processus de systèmes microélectromécaniques (MEMS).

12. Le procédé de la revendication 10, dans lequel l'obtention du scanner (22) comprend la liaison des miroirs d'émission et de réception à la suspension par des articulations respectives disposées le long des seconds axes respectifs et configurés de manière que les miroirs d'émission et de réception tournent autour des articulations respectives en oscillant à des fréquences de résonance respectives, et le couplage des miroirs d'émission et de réception ensemble de manière à synchroniser l'oscillation.

13. Le procédé selon l'une des revendications 10 à 12, comprenant le traitement de la sortie afin de générer une carte tridimensionnelle (3D) de la scène sur la base du temps de vol des impulsions.
